(19) Europäisches Patentamt
European Patent Office
Office européen des brevets

(11) **EP 4 530 243 A1**

(12) **EUROPEAN PATENT APPLICATION**
published in accordance with Art. 153(4) EPC

(43) Date of publication:
02.04.2025 Bulletin 2025/14

(21) Application number: 23830928.0

(22) Date of filing: 29.05.2023

(51) International Patent Classification (IPC):
**B66C 13/22** (2006.01)

(52) Cooperative Patent Classification (CPC):
B66C 13/22

(86) International application number:
PCT/JP2023/019848

(87) International publication number:
WO 2024/004478 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022 JP 2022105680

(71) Applicant: JFE Steel Corporation
Tokyo 100-0011 (JP)

(72) Inventors:
• TAKAKI Yuki
Tokyo 100-0011 (JP)
• KOSHIHARA Takahiro
Tokyo 100-0011 (JP)
• YOSHINARI Yusuke
Tokyo 100-0011 (JP)

(74) Representative: Grünecker Patent- und
Rechtsanwälte
PartG mbB
Leopoldstraße 4
80802 München (DE)

(54) **PLATE MEMBER POSITION DETECTION DEVICE, PLATE MEMBER TRANSPORT METHOD, AND PLATE MEMBER MANUFACTURING METHOD**

(57) Provided is a plate member position detection device that can accurately detect the position of an uppermost plate member as a target to be lifted from among stacked plate members. At the time when an uppermost steel sheet among stacked steel sheets (plate members) is lifted by a crane, an image of the stacked steel sheets including the whole uppermost steel sheet is acquired by an image acquisition unit. Then, the position of the uppermost steel sheet is detected by comparing template information for the uppermost steel sheet with the image. Hereby, even in a case where steel sheets with small plate thicknesses are stacked, it is possible to accurately detect the position of the uppermost steel sheet as a target to be lifted. Particularly, in a case where the uppermost steel sheet is adsorbed and lifted by an adsorption mechanism such as a lifting magnet, it is possible to secure stability of the steel sheet adsorbed and lifted.

FIG. 3

## Description

Technical Field

The present invention relates to a plate member position detection device, a plate member transport method, and a plate member manufacturing method.

Background Art

A plate mill factory in a steel works includes rolling equipment for rolling a massive steel sheet into a desired thickness, finishing equipment for performing cutting of the rolled steel sheet into a shipment size, deburring in end portions, repairing of defects on surfaces, inspecting of internal defects, and the like, and a product warehouse in which steel sheets for shipping are stored. Steel sheets as products in process in the finishing equipment or the steel sheets for shipping in the product warehouse are stored in a state where several to a dozen steel sheets are stacked due to restriction of a storage space. At the time when the steel sheets are rearranged or shipped, one or several target steel sheets are lifted and moved by use of a crane (a lifting device) to which an electromagnetic lifting magnet (an adsorption mechanism, also referred to as a "lifting magnet") or the like is attached, for example.

When this operation is performed, it is necessary to accurately grasp the position of the target steel sheets. Particularly, in the plate mill factory in the steel works, a thick steel sheet having a plate thickness of 100 mm or more may be adsorbed (magnetically attracted) and lifted by the lifting magnet of the crane. In such a case, when the gravitational center of a target steel sheet to be lifted deviates from the center of the lifting magnet, the steel sheet might be dropped due to an unbalanced load in the worst case. On this account, means for accurately grasping the position of the steel sheet, particularly the gravitational center position of the steel sheet is required.

In order to deal with such a problem, Patent Document 1 discloses a technology as a method for detecting the position of a target steel sheet to be lifted, for example. The technology disclosed in Patent Document 1 proposes a method for obtaining the shapes and the gravitational center positions of stacked steel sheets by image processing to separately extract a planar image and a side image of the steel sheets from an image captured by a camera from diagonally above the steel sheets.

Citation List

Patent Literature

Patent Document 1: JP H7-330287 A

Summary of Invention

Technical Problem

The method in Patent Document 1 is a method in which the installation position of each steel sheet is calculated by separating the stacked steel sheets at stepped portions by detecting step shapes in the stacked steel sheets by image processing. However, in a state where a plurality of thin steel sheets having a plate thickness of around 10 mm or less is stacked, upper and lower steel sheets are detected in an integrated manner, and therefore, it is difficult to detect only the position of an uppermost steel sheet as a target to be lifted.

The present invention is accomplished in view of the above problems, and an object of the present invention is to provide a plate member position detection device, a plate member transport method, and a plate member manufacturing method each of which can accurately detect the position of an uppermost plate member as a target to be lifted from among stacked plate members.

Solution to Problem

In order to achieve the above object, a plate member position detection device according to one aspect of the present invention is a plate member position detection device for detecting a position of an uppermost plate member among stacked plate members when the uppermost plate member is lifted by a lifting device, and the plate member position detection device includes: an image acquisition unit configured to acquire an image of the stacked plate members including the whole uppermost plate member; and a computing unit configured to detect the position of the uppermost plate member by comparing template information created in advance for the uppermost plate member with the image.

Further, a plate member transport method according to one aspect of the present invention is a plate member transport method for handling and transporting an uppermost plate member among stacked plate members with the uppermost plate member being adsorbed and lifted by an adsorption mechanism of a lifting device, and the plate member transport method includes: acquiring, by an image acquisition unit, an image of the stacked plate members including the whole uppermost plate member; detecting a position of the uppermost plate member by comparing template information created in advance for the uppermost plate member with the image; and handling and transporting the uppermost plate member such that the uppermost plate member is adsorbed by the adsorption mechanism and lifted by the lifting device after the adsorption mechanism is positioned based on the detected position of the uppermost plate member.

Further, a plate member manufacturing method according to one aspect of the present invention includes handling and transporting the uppermost plate member with the uppermost plate member being lifted based on the detected position of the uppermost plate member which position is detected by the plate member position detection device.

Advantageous Effects of Invention

With the plate member position detection device, the plate member transport method, and the plate member manufacturing method according to the present invention, it is possible to accurately detect the position of an uppermost plate member as a target to be lifted from among stacked plate members.

Brief Description of Drawings

FIG. 1 is a schematic configuration diagram of a crane to which a plate member position detection device, a plate member transport method, and a plate member manufacturing method according to the present invention are applied.
FIG. 2 is a block diagram of a system provided in the crane in FIG. 1.
FIG. 3 is a block diagram of a computing unit in FIG. 2.
FIG. 4 is an explanatory drawing of the content of a computing process performed in a plate member peripheral edge detecting unit in FIG. 3.
FIG. 5 is an explanatory drawing of template information created in a plate member template information creating unit in FIG. 3.
FIG. 6 is an explanatory drawing of a method for creating the template information in FIG. 5.
FIG. 7 is an explanatory drawing of the content of a computing process performed in a plate member position calculating unit of FIG. 3.
FIG. 8 is an explanatory drawing of the content of a computing process performed in a plate member position calculating unit of FIG. 3.
FIG. 9 is an explanatory drawing of a calculation method for calculating a gravitational center position in an actual space, the calculation method being performed in the plate member position calculating unit of FIG. 3.
FIG. 10 is an explanatory drawing of an arrangement state of plate members in an example.

Description of Embodiments

The following describes one embodiment of a plate member position detection device, a plate member transport method, and a plate member manufacturing method according to the present invention in detail with reference to the drawings. The embodiment described below deals with a device or a method to embody the technical idea of the present invention, and the technical idea of the present invention does not specify quality, shape, structure, arrangement, and the like of component parts to those of the embodiment described below. Further, the drawings are schematic. Accordingly, it should be noted that the relationship, ratio, and the like between thickness and planar dimension are different from actual ones, and the drawings include parts having a different dimensional relationship or ratio.

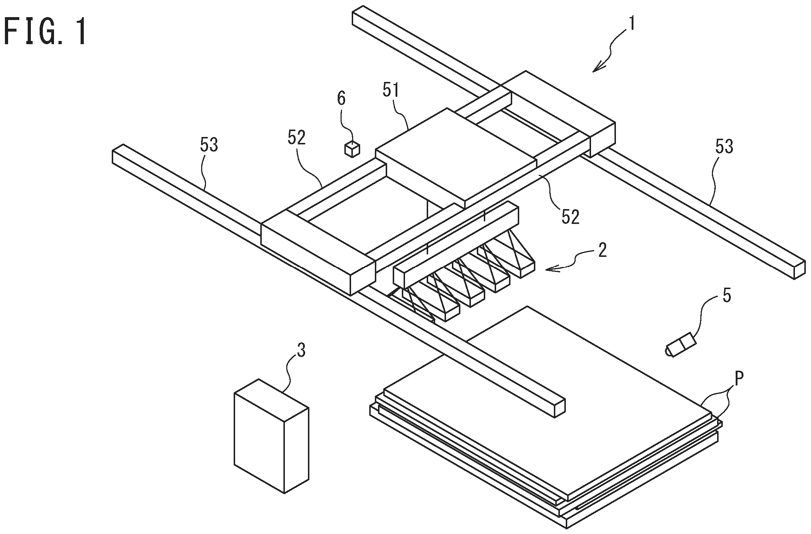

FIG. 1 is a schematic configuration diagram of a crane (a lifting device) 1 to illustrate one embodiment of the plate member position detection device, the plate member transport method, and the plate member manufacturing method. In this embodiment, handling and transportation of an uppermost steel sheet P among steel sheets (plate members) P stacked in a stockyard inside a crane building is performed with the uppermost steel sheet P being lifted by the crane 1. The crane 1 in this embodiment includes an electromagnetic lifting magnet 2 as an adsorption mechanism, and the lifting magnet 2 lifts the uppermost steel sheet P in such a manner as to hold the uppermost steel sheet P by adsorption (magnetic attraction). The electromagnetic lifting magnet 2 is desirable as a mechanism for holding the steel sheet P, but a holding mechanism such as a permanent-magnetic lifting magnet or a clamp is also usable.

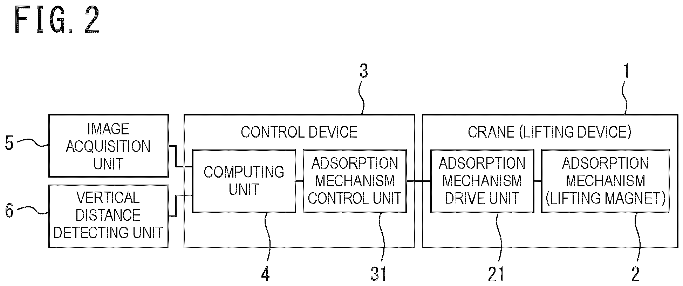

The crane 1 in this embodiment is a so-called overhead crane and is configured such that a trolley 51 from which the lifting magnet 2 is hung moves over a girder 52, and the girder 52 runs over traveling rails (runway) 53. The lifting and lowering of the lifting magnet 2, the movement of the trolley 51, and the running of the girder 52 are performed by drive units each including a drive source or a drive mechanism (not illustrated), and each of the drive units is driven by a control device 3 configured to control the overall operation of the crane 1. As illustrated in FIG. 2, the lifting magnet 2 includes a lifting magnet drive unit (in the drawing, an adsorption mechanism drive unit) 21 configured to drive the lifting magnet 2. The operations of these mechanisms are stored as logics (programs) in an arithmetic processing unit, e.g., a programmable logic controller, provided in the control device 3, and the steel sheet P is automatically handled and transported in response to a command from a host computer (not illustrated). The arithmetic processing unit in the control device 3 is one of computer systems including a computing processing section that can perform an advanced computing process, a storage unit in which programs and data can be stored, and an input-output section that controls input and output with an external section. Of course, the mechanisms are also individually operable by an operator. Further, the configuration of the crane 1 is not limited to the configuration described above.

In this embodiment, as will be described later, the position of the uppermost steel sheet P among the stacked steel sheets P is detected, and only the steel sheet P is adsorbed by the lifting magnet 2 and lifted by the crane **1.** At the time of adsorption, the lifting magnet 2 is lowered onto the steel sheet P with the central position of the lifting magnet 2 being aligned with the position of the detected steel sheet P, more specifically, the gravitational center position of the detected steel sheet P, and in that state, the lifting magnet 2 excites an electromagnet to adsorb (magnetically attract) the steel sheet P. These logics are also stored in the arithmetic processing unit in the aforementioned control device 3, e.g., the programmable logic controller, and when the position (the gravitational center position) of the steel sheet P is output from the computing unit 4 of the plate member position detection device (also referred to as a "steel sheet position detection device"), the logics are accordingly performed automatically. As illustrated in FIG. 2, the lifting magnet 2 includes a lifting magnet (adsorption mechanism) control unit 31 configured to control the driving state of the lifting magnet (adsorption mechanism) drive unit 21.

In this embodiment, the computing unit 4 configured to detect (calculate) the position (the gravitational center position) of the uppermost steel sheet P among the stacked steel sheets P is incorporated within the control device 3 for controlling the crane 1. Accordingly, the computing unit 4 is also constituted by a computing process performed by the arithmetic processing unit in the control device 3, e.g., the programmable logic controller. The computing unit 4 constitutes a main part of the steel sheet (plate member) position detection device configured to detect the position of the uppermost steel sheet P among the stacked steel sheets P. Note that the computing unit 4 may be built in the control device 3 of the crane 1 or may be constituted by use of a personal computer or the like, for example.

In order to accurately detect the position of the uppermost steel sheet P by the computing unit 4, the steel sheet position detection device includes an image acquisition unit 5 configured to acquire an image of the steel sheets P stacked in the stockyard, including the whole uppermost steel sheet P. The steel sheet position detection device also includes a vertical distance detecting unit 6 configured to detect a distance (vertical distance) h in the vertical direction between the image acquisition unit 5 and the uppermost steel sheet P. The image acquisition unit 5 is constituted by a 4K-camera (video camera), for example, and this camera is placed so that the steel sheets P are captured from a diagonally upper side in the stockyard in such a manner that all the steel sheets P stacked in the stockyard are captured but the lifting magnet 2 is hardly captured. The arrangement of the image acquisition unit 5 is not limited to this. In the meantime, the vertical distance detecting unit 6 is constituted by a laser range finder, for example, and detects the height of the uppermost steel sheet P (the top surface thereof) in the stacked steel sheets P from the height of the camera as the image acquisition unit 5 as the vertical distance h, for example. A well-known distance detecting unit such as an ultrasonic radar or a 3D-scanner can be also used as the vertical distance detecting unit 6.

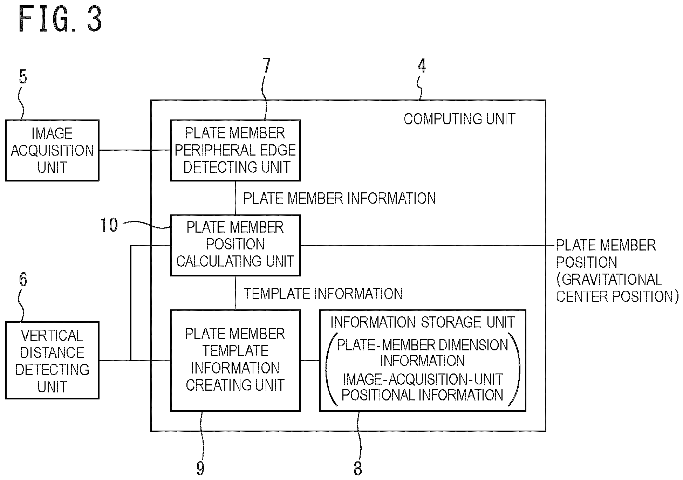

FIG. 3 is a block diagram of the computing unit 4 of the steel sheet position detection device, and each block indicates a function to be implemented by a computing process or the like. That is, each block indicates a function step in the flowchart of a computing process. Details of each function block will be described later. The computing unit 4 includes a plate member peripheral edge detecting unit 7 configured to detect peripheral edges of the steel sheets (plate members) P from an image of the steel sheets P stacked in the stockyard, the image being acquired by the image acquisition unit 5, and to output information (plate member information) on the plate members, the information being detected as a result of the detection. The plate member information is information on a plurality of polygonal shapes constituted by a plurality of detected steel-sheet peripheral edges and includes vertex coordinates of each of the polygonal shapes in a coordinate system (hereinafter referred to as an image setting coordinate system) set in the image. Further, the computing unit 4 includes an information storage unit 8 in which dimension information on a steel sheet (a plate member) P to be lifted and then handled and transported, or information on the orientation or the position of the image acquisition unit 5 (more accurately, the relative position between the image acquisition unit 5 and the uppermost steel sheet P) is stored. The dimension information on the steel sheet P to be lifted is selected based on steel sheet information from a host computer such as a process computer. The orientation or the position (the relative position with the uppermost steel sheet P) of the image acquisition unit 5 will be described later.

The computing unit 4 also includes a plate member template information creating unit 9 configured to create template information for the uppermost steel sheet P based on the detected vertical distance h between the uppermost steel sheet P and the image acquisition unit 5, and steel-sheet dimension information or image-acquisition-unit positional information provided from the information storage unit 8. The template information is polygonal-shape information indicative of how the uppermost steel sheet P is captured, that is, a model for the image of the uppermost steel sheet P, and includes vertex coordinates of the polygonal shape in the image setting coordinate system. In addition, the computing unit 4 includes a plate member position calculating unit 10 configured to calculate the position of the uppermost steel sheet P, more specifically, the gravitational center position thereof by comparing the template information provided from the plate member template information creating unit 9 with the detected plate member information. In this example, the gravitational center position of the uppermost steel sheet P is output such that the gravitational center position is converted from the image setting coordinate system into a coordinate system in an actual space so that the lifting magnet 2 of the crane 1 is easily aligned with the uppermost steel sheet P. Note that the plate member template information creating unit 9 is expressed as a "creating" section so that a creation procedure of the template information to be described later is easily understandable, but template information created in advance based on the dimension of each steel sheet P or a relative position with the image acquisition unit 5 may be stored therein.

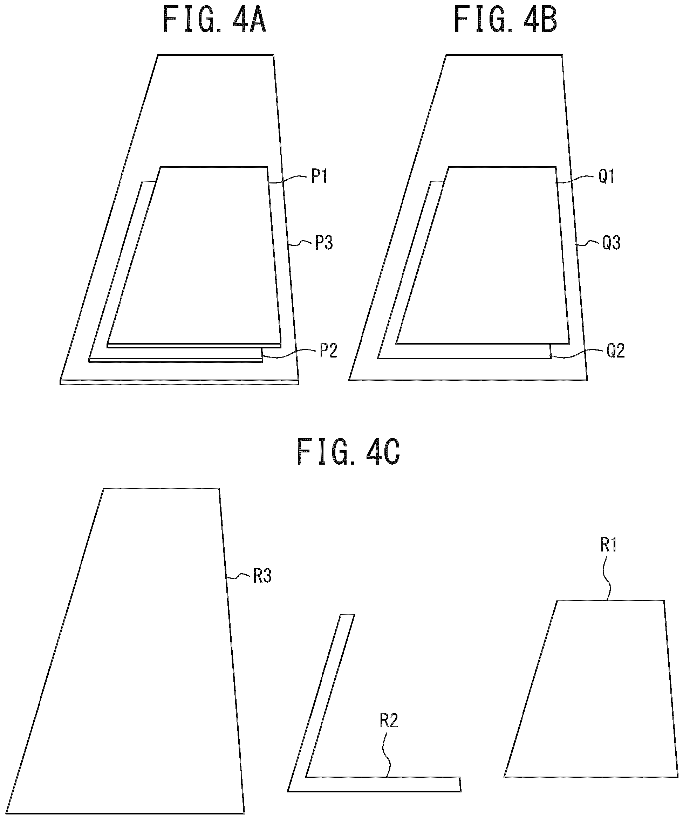

Next will be described the content of a computing process performed in the plate member peripheral edge detecting unit 7 with reference to FIG. 4. FIG. 4A illustrates an image of a plurality of steel sheets P1 to P3 which image is acquired by the image acquisition unit 5. The number of steel sheets P herein is three for convenience. Respective peripheral edges of the steel sheets P1 to P3 are detected from this image and are converted into polygonal line drawings Q1 to Q3 as illustrated in FIG. 4B, for example. As for the peripheral edges of the steel sheets P1 to P3, a portion where a shadow or a color detectable from the image greatly changes can be recognized as a peripheral edge. In this example, a peripheral edge of the steel sheet P is detected based on changes in shadow or color, but the peripheral edge of the steel sheet P may be directly detected with the use of machine learning using a so-called machine learning model for object detection. Then, a plurality of pieces of polygonal-shape information obtained as such are extracted as pieces of plate member information R1 to R3 as illustrated in FIG. 4C. The pieces of polygonal plate member information R1 to R3 each have vertex coordinates in a coordinate system set in the image as will be described later. Pattern matching is performed on the plurality of pieces of plate member information R1 to R3 and the template information created for the uppermost steel sheet P1 so as to specify which one of the pieces of plate member information corresponds to the uppermost steel sheet P1.

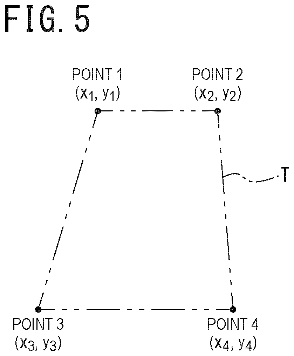

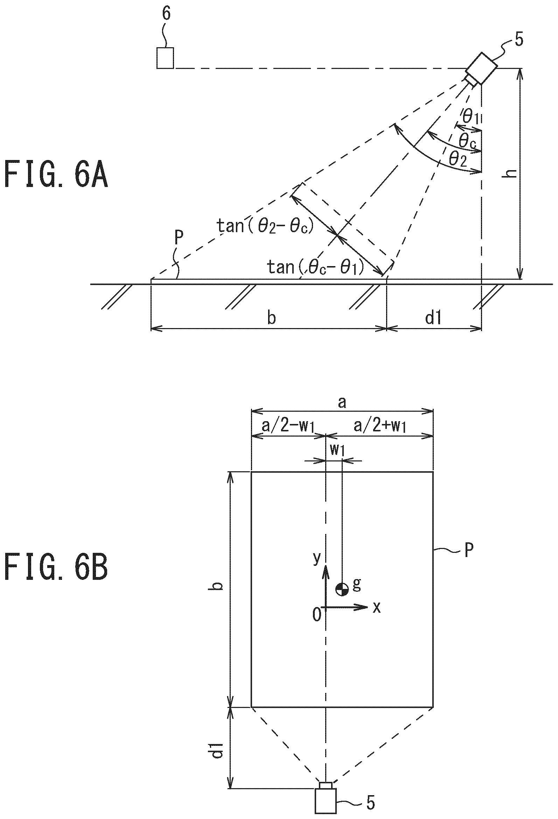

Next will be described the content of a computing process performed in the plate member template information creating unit 9 with reference to FIGS. 5, 6. FIG. 5 illustrates template information T for the uppermost steel sheet P which temperate information T is created by the plate member template information creating unit 9 for the stacked steel sheets P in FIG. 4A. As described above, the template information T is polygonal-shape (square-shape) information for the uppermost steel sheet P in the image and includes a point 1 $(x_1, y_1)$ to a point 4 $(x_4, y_4)$ as vertex coordinates of the square shape. This square shape changes depending on the dimension (vertical dimension, horizontal dimension) of the uppermost steel sheet P, a position where the uppermost steel sheet P is disposed, the vertical distance (height) h from the uppermost steel sheet P (the top surface thereof) to the image acquisition unit 5, and the orientation of the image acquisition unit (camera) 5. Accordingly, at the time when pattern matching with the plurality of pieces of plate member information R1 to R3 thus extracted is performed, it is necessary to create template information T corresponding to the actual uppermost steel sheet P.

The creation procedure of template information will be described with reference to FIG. 6. FIG. 6A is a front view illustrating the arrangement of the uppermost steel sheet P and the image acquisition unit (camera) 5, and FIG. 6B is a plan view of the arrangement. For example, the up-down direction in FIG. 6B is defined as a vertical direction, the lateral direction in FIG. 6B is defined as a lateral direction, a view angle (angle of view) of the image acquisition unit (camera) 5 in the vertical (= up-down) direction is defined as $2\theta d$, and a view angle thereof in the lateral direction is defined as $2\theta w$. Further, as illustrated in FIG. 6A, an angle between the view angle center of the image acquisition unit (camera) 5 and the vertical direction, that is, the orientation of the image acquisition unit 5 relative to the vertical direction is defined as $\theta c$. They are default values. Further, the center of an acquired image is defined as the origin, the lateral direction of a drawing based on the origin is set as an x-axis, the vertical direction thereof is set as a y-axis, the right direction in the x-axis is defined as a positive x-coordinate, and the upper direction in the y-axis is defined as a positive y-coordinate. Further, the dimension of the uppermost steel sheet P in the vertical direction (the y-axis direction) is defined as b, and the dimension thereof in the lateral direction (the x-axis direction) is defined as a. This is dimensional data of the steel sheet P. Further, a vertical distance from the uppermost steel sheet P (the top surface thereof) to the image acquisition unit (camera) 5 which vertical distance is detected by the vertical distance detecting unit 6 is defined as h. This is a detection value (a measurement value). Further, a distance in the vertical direction (the y-axis direction) from the image acquisition unit (camera) 5 to the uppermost steel sheet P is defined as $d_1$, and a distance in the lateral direction (the x-axis direction) from the origin (the center of the image) to the gravitational center position of the uppermost steel sheet P is defined as $w_1$. Here, the distances $d_1$, $w_1$ are described as fixed values. However, as will be described later, the distances $d_1$, $w_1$ may be variables, and pieces of template information T corresponding to a plurality of different distances $d_1$, $w_1$ may be created in advance and stored.

When, in the uppermost steel sheet P assumed to be captured by the image acquisition unit 5, a view angle of a y-axis-direction image acquisition unit side edge (hereinafter referred to as a near-side edge) relative to the vertical direction is defined as θ1, and a view angle of its opposite side edge (hereinafter referred to as a far-side edge) relative to the vertical direction is defined as 82, as illustrated in FIG. 6A, θ1 and θ2 are expressed by Formula 1 and Formula 2 as follows.

$$[\text{Math. 1}]$$

$$\theta_1 = \mathrm{Arctan}(d1/h) \qquad \cdots \ (1)$$

$$\theta_2 = \mathrm{Arctan}((d1+b)/h) \qquad \cdots \ (2)$$

Further, in the uppermost steel sheet P assumed to be captured by the image acquisition unit 5, the y-coordinate of the far-side edge is expressed as $\tan(\theta2 - \theta c)$, and the y-coordinate of the near-side edge is expressed as $-\tan(\theta c - \theta1)$. Further, as illustrated in FIG. 6B, in the uppermost steel sheet P assumed to be captured by the image acquisition unit 5, the x-coordinate of a vertex which is on an x-axis negative-side edge (hereinafter, a left edge) and which is on the far-side edge is -(a/2 - w1)/(d1 + b). Similarly, the x-coordinate of a vertex which is on an x-axis positive-side edge (hereinafter, a right edge) and which is on the far-side edge is (a/2 + w1)/(d1 + b), the x-coordinate of a vertex which is on the left edge and which is on the near-side edge is -(a/2 - w1)/(d1), and the x-coordinate of a vertex which is on the right edge and which is on the near-side edge is (a/2 + w1)/(d1). Accordingly, vertex coordinates of the square shape illustrated in FIG. 5, i.e., the point 1 (x1, y1) to the point 4 (x4, y4), can be expressed by Formula 3 to Formula 6, as follows.

$$[\text{Math. 2}]$$

$$\text{POINT } 1(x_1, y_1) = [-(a/2 - w_1)/(d1+b), \tan(\theta_2 - \theta_c)] \qquad \cdots \ (3)$$

$$\text{POINT } 2(x_2, y_2) = [(a/2 + w_1)/(d1+b), \tan(\theta_2 - \theta_c)] \qquad \cdots \ (4)$$

$$\text{POINT } 3(x_3, y_3) = [-(a/2 - w_1)/d1, -\tan(\theta_c - \theta_1)] \qquad \cdots \ (5)$$

$$\text{POINT } 4(x_4, y_4) = [(a/2 + w_1)/d1, -\tan(\theta_c - \theta_1)] \qquad \cdots \ (6)$$

That the distances d1, w1 are fixed values indicates that at least a corresponding steel sheet P is disposed at generally the same position. In a case where the disposition position of the steel sheet P is considered to change, pieces of template information T corresponding to a plurality of different distances d1, w1 may be individually created in advance and used at the time of pattern matching with the plurality of pieces of plate member information R1 to R3 (described later). Similarly, in terms of the distance h from the uppermost steel sheet P (the surface thereof) to the image acquisition unit 5, a plurality of pieces of template information T for a plurality of different distances h may be created in advance and used at the time of pattern matching with the plurality of pieces of plate member information R1 to R3. Further, for example, in a case where the image acquisition unit 5 is placed right above the steel sheet P, the calculation should be performed with the angle θc between the center of the view angle and the vertical direction being set to zero and the distance d1 in the y-axis direction from the image acquisition unit 5 to the uppermost steel sheet P being set to a negative value.

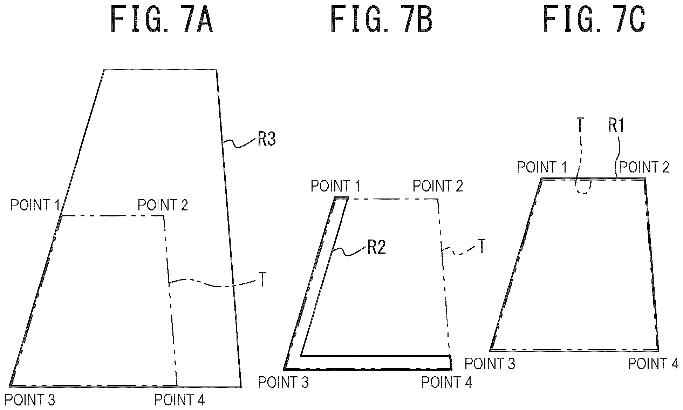

Next will be described the content of a computing process performed in the plate member position calculating unit 10 with reference to FIGS. 7 to 9. The plate member position calculating unit 10 first performs pattern matching between the pieces of extracted plate member information R1 to R3 and the created template information T. FIG. 7 is a conception diagram illustrating pattern matching between three pieces of plate member information R1 to R3 extracted by the plate member peripheral edge detecting unit 7 as illustrated in FIG. 4C, that is, pieces of polygonal-shape information of the steel sheets P, and the template information T created by the plate member template information creating unit 9 as illustrated in FIG. 5. In this example, pattern matching is performed such that a lower-left vertex, in the figure, of the polygonal-shape information of each steel sheet P is positioned on the point 3 of the template information T. For example, in pattern matching between the plate member information R3 and the template information T in FIG. 7A, only the coordinates of the point 3 are matched with its corresponding vertex coordinates of the plate member information R3. Further, in pattern matching between the plate member information R2 and the template information T in FIG. 7B, respective coordinates of the point 1, the point 3, and the point 4 are matched with their corresponding vertex coordinates of the plate member information R2, but the coordinate of the point 2 is not matched with its corresponding vertex. In the meantime, in pattern matching between the plate member information R1 and the template T in FIG. 7C, all vertex coordinates of the plate member information R1 are matched with those of the template T. Thus, in this embodiment, plate member information with the highest rate of matching in the pattern matching, that is, the plate member information R1 in FIG. 7C is considered to be the uppermost steel sheet P that should be handled and transported.

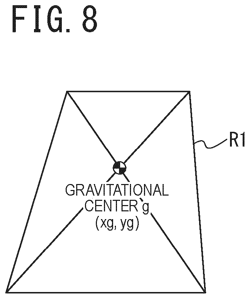

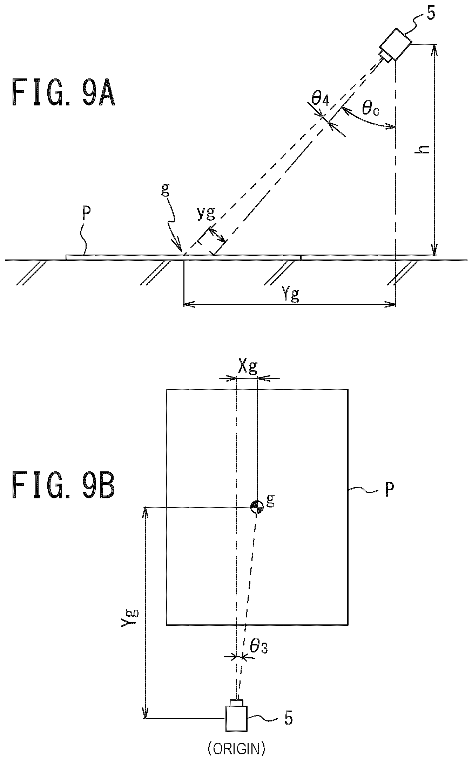

When the plate member information R1 considered to be the uppermost steel sheet P is selected (specified) as such, the position of a gravitational center g of the plate member information R1 is found. Since a rolled steel sheet is uniform in thickness and quality of material, the gravitational center position of the steel sheet P is matched with the center of the figure. In this example, as illustrated in FIG. 8 the gravitational center g is at the intersection of diagonal lines of the square shape. Since the coordinates of the point 1 to the point 4 have been known, gravitational-center coordinates (xg, yg) can be also calculated. When the gravitational-center coordinates (xg, yg) of the uppermost steel sheet P in the coordinate system set in the image is obtained as such, the gravitational-center coordinates (xg, yg) is converted into gravitational-center coordinates (Xg, Yg) of the uppermost steel sheet P in the actual space for setting the center of the lifting magnet 2, as described above. The origin in the actual space is at the position of the image acquisition unit 5 on a horizontal plane. A view angle (a view-angle deviation angle) of the gravitational center g relative to the view angle center $\theta c$ in the lateral direction (the x-axis direction) is defined as $\theta 3$, as illustrated in FIG. 9B, and a view angle (a view-angle deviation angle) thereof in the vertical direction (the y-axis direction) is defined as $\theta 4$, as illustrated in FIG. 9A. The view-angle deviation angles $\theta 3$, $\theta 4$ are expressed by Formula 7 and Formula 8 as follows.

[Math. 3]

$$\theta_3 = \mathrm{Arctan}(xg) \qquad \cdots (7)$$

$$\theta_4 = \mathrm{Arctan}(yg) \qquad \cdots (8)$$

Based on the geometric relationship illustrated in FIG. 9, elements of the gravitational-center coordinates (Xg, Yg) in the actual space with the image acquisition unit 5 being taken as the origin are expressed by Formula 9 and Formula 10 as follows.

[Math. 4]

$$Xg = h \times \tan(\theta_4 + \theta_c) \times \tan\theta_3 \qquad \cdots (9)$$

$$Yg = h \times \tan(\theta_4 + \theta_c) \qquad \cdots (10)$$

When the gravitational center position of the uppermost steel sheet P in the actual space is obtained as such, the center of the lifting magnet 2 is set at the gravitational center of the steel sheet **P,** and then, the lifting magnet 2 is lowered on the steel sheet **P, as** described earlier. An electric current is applied to the lifting magnet 2 in this state such that the lifting magnet 2 magnetically attracts the uppermost steel sheet **P,** and while this state is maintained, the uppermost steel sheet P is lifted by the crane 1 and then handled and transported.

Thus, in this embodiment, at the time when the uppermost steel sheet P among the stacked steel sheets (plate members) P is lifted by the crane 1, an image of the stacked steel sheets P, including the whole uppermost steel sheet P, is acquired. Then, by comparing the template information T for the uppermost steel sheet P with the image, the position of the uppermost steel sheet P is detected. Hereby, even in a case where the steel sheets P with small plate thicknesses are stacked, it is possible to accurately detect the position of the uppermost steel sheet P as a target to be lifted. Particularly, in a case where the uppermost steel sheet P is adsorbed and lifted by an adsorption mechanism such as the lifting magnet 2, it is possible to secure stability of the steel sheet P adsorbed and lifted.

In addition, the vertical distance h between the uppermost steel sheet P and the image acquisition unit 5 is detected, and the template information T is created based on the vertical distance h, dimension information on the uppermost steel sheet P, and positional information on the image acquisition unit 5. Hereby, it is possible to acquire appropriate template information T serving as a model for an image of the uppermost steel sheet P to be captured, thereby consequently making it possible to further accurately detect the position of the uppermost steel sheet P.

Besides, in a case where the pieces of plate member information R1 to R3 are created by detecting the peripheral edge of the uppermost steel sheet P from the image of the stacked steel sheets P, the position of the uppermost plate member is calculated by comparing the pieces of plate member information R1 to R3 with the template information T. Hereby, particularly, even in a case where the steel sheets P with small plate thicknesses are stacked, it is possible to accurately detect the position of the uppermost steel sheet P as a target to be lifted. Particularly, in a case where a plurality of pieces of plate member information R1 to R3 is provided, when the position of the uppermost steel sheet P is calculated based on plate member information with the highest rate of matching as a result of comparison between the pieces of plate member information R1 to R3 and the template information T, it is possible to more accurately detect the position of the uppermost steel sheet P.

Further, when the vertical distance h between the uppermost steel sheet P and the image acquisition unit 5 is detected, and the position of the gravitational center g of the uppermost steel sheet P in the actual space is calculated based on the vertical distance h, it is possible to easily set the center of the lifting magnet 2 at the gravitational center g of the uppermost steel sheet P.

Examples

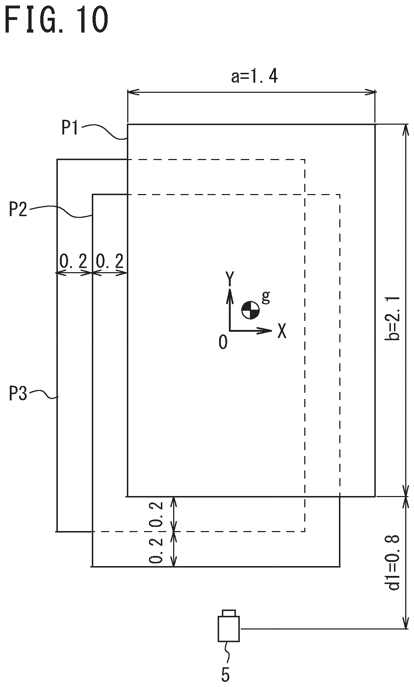

In order to evaluate the plate member position detection device, the plate member transport method, and the plate member manufacturing method according to the present invention, the following examinations were performed. As the image acquisition unit (camera) 5, a 4K-camera having an about 10 million pixels (3648 × 2736) was used. Further, steel sheets P1 to P3 having a horizontal dimension of 1.4 m and a vertical dimension of 2.1 m were prepared with various plate thicknesses, and three steel sheets were put on top of each other as illustrated in FIG. 10. The vertical distance h from the uppermost steel sheet P1 (the top surface thereof) to the image acquisition unit 5 was set to 4.94 m, the vertical distance d1 between the uppermost steel sheet P1 and the image acquisition unit 5 was set to 0.8 m, and the lateral distance w1 between the gravitational center of the uppermost steel sheet P1 and the origin (the view angle center) was set to 0.2 m. The other conditions are shown in Table 1.

[Table 1]

| CONSTANT | VALUE |
|---|---|
| $2\theta d$ | 60° |
| $2\theta w$ | 60° |
| $\theta c$ | 30° |
| h | 4.94 m |
| a | 1.4 m |
| b | 2.1 m |
| d1 | 0.8 m |
| w1 | 0.2 m |

In the example of the present invention, the steel sheet position detection device according to the embodiment (FIG. 3) was used, and in a comparative example, a plate member detected by the plate member peripheral edge detecting unit 7 in FIG. 3 was considered to be the uppermost steel sheet P1. That is, in the steel sheet position detection device in the example, the uppermost steel sheet P1 was specified by performing pattern matching between the template information T created based on the conditions in Table 1 and pieces of detected plate member information R1 to R3. First, three steel sheets having a plate thickness t20 were stacked as illustrated in FIG. 10, and the gravitational center position of the uppermost steel sheet P1 was calculated by respective steel sheet position detection devices of the example and the comparative example. Calculation results of the example are shown in Table 2. As apparent from Table 2, the gravitational center position of the uppermost steel sheet P1 can be detected with accuracy.

[Table 2]

| | GRAVITATIONAL CENTER POSITION | |
|---|---|---|
| | X | Y |
| ACTUAL MEASUREMENT VALUE | 0.203 (m) | 1.855 (m) |
| CALCULATED VALUE | 0.210 (m) | 1.843 (m) |
| DIFFERENCE | +0.007 (m) | -0.012 (m) |

In the meantime, calculation results by the steel sheet position detection device of the comparative example are shown in Table 3. As apparent from Table 3, the gravitational center position of the uppermost steel sheet P1 can be detected with accuracy even by the steel sheet position detection device of the comparative example.

[Table 3]

| | GRAVITATIONAL CENTER POSITION | |
| --- | --- | --- |
| | X | Y |
| ACTUAL MEASUREMENT VALUE | 0.203 (m) | 1.855 (m) |
| CALCULATED VALUE | 0.194 (m) | 1.861 (m) |
| DIFFERENCE | -0.009 (m) | +0.006 (m) |

Subsequently, three steel sheets having respective plate thicknesses of t20, t10, t5 were stacked in this order from the lower side as illustrated in FIG. 10, and the gravitational center position of the uppermost steel sheet P1 was calculated by respective steel sheet position detection devices of the example and the comparative example. That is, the plate thickness of the uppermost steel sheet P1 is t5. Calculation results of the example are shown in Table 4. As apparent from Table 4, the gravitational center position of the uppermost steel sheet P1 can be detected with accuracy.

[Table 4]

| | GRAVITATIONAL CENTER POSITION | |
| --- | --- | --- |
| | X | Y |
| ACTUAL MEASUREMENT VALUE | 0.203 (m) | 1.855 (m) |
| CALCULATED VALUE | 0.198 (m) | 1.861 (m) |
| DIFFERENCE | -0.005 (m) | +0.006 (m) |

In the meantime, calculation results by the steel sheet position detection device of the comparative example are shown in Table 5. As apparent from Table 5, the gravitational center position of the uppermost steel sheet P1 cannot be detected with accuracy by the steel sheet position detection device of the comparative example.

[Table 5]

| | GRAVITATIONAL CENTER POSITION | |
| --- | --- | --- |
| | X | Y |
| ACTUAL MEASUREMENT VALUE | 0.203 (m) | 1.855 (m) |
| CALCULATED VALUE | 0.018 (m) | 1.667 (m) |
| DIFFERENCE | -0.185 (m) | -0.188 (m) |

As described above, the peripheral edges of the steel sheets P put on top of each other are detected based on changes in shadow or color on the steel sheets P in the image, and therefore, in a case where the steel sheet P has a small thicknesses, for example, in a case where the steel sheet P has a plate thickness of 10 mm or less, it is difficult to determine changes in shadow or color, and as a result, the peripheral edge of such a thin steel sheet P may not be detected. As a result, the uppermost steel sheet P1 and the steel sheets P2, P3 stacked under the uppermost steel sheet P1 are misrecognized as one steel sheet, thereby resulting in that the position of the uppermost steel sheet P1 cannot be detected with accuracy. That is, the steel sheet position detection device of the comparative example cannot detect the uppermost steel sheet P1 by distinguishing it from the steel sheets P2, P3 stacked under the uppermost steel sheet P1, thereby resulting in that the uppermost steel sheet P1 cannot be specified. In contrast, in the steel sheet position detection device in the present example, the template information T is created based on the specification of the uppermost steel sheet P1 or an installation condition for steel sheets. Consequently, it is found that the uppermost steel sheet P1 can be specified with accuracy by performing pattern matching between the template information T thus created and the pieces of plate member information R1 to R3.

The plate member position detection device, the plate member transport method, and the plate member manufacturing method according to the embodiment have been described above, but the present invention is not limited to the configuration described in the above embodiment, and it is possible to make various modifications within the gist of the present invention. For example, in the above embodiment, a coordinate system is set in an image, and the image of the steel sheet P is geometrically examined in the coordinate system, but which position the steel sheet P is at may be examined in a coordinate system set in the actual space, for example. Similarly, any well-known technique can be also used to analyze the captured image of the steel sheet P.

Reference Signs List

| | |
|---|---|
| 1 | crane (lifting device) |
| 2 | lifting magnet (adsorption mechanism) |
| 3 | control device |
| 4 | computing unit |
| 5 | image acquisition unit |
| 6 | vertical distance detecting unit |
| 7 | plate member peripheral edge detecting unit |
| 8 | information storage unit |
| 9 | plate member template information creating unit |
| 10 | plate member position calculating unit |

**Claims**

1.  A plate member position detection device for detecting a position of an uppermost plate member among stacked plate members when the uppermost plate member is lifted by a lifting device, the plate member position detection device comprising:

    an image acquisition unit configured to acquire an image of the stacked plate members including the whole uppermost plate member; and
    a computing unit configured to detect the position of the uppermost plate member by comparing template information created in advance for the uppermost plate member with the image.

2.  The plate member position detection device according to claim 1, further comprising

    a vertical distance detecting unit configured to detect a distance in a vertical direction from the uppermost plate member to the image acquisition unit as a vertical distance, wherein
    the computing unit includes a plate member template information creating unit configured to create the template information based on the vertical distance, dimension information on the uppermost plate member, and positional information on the image acquisition unit.

3.  The plate member position detection device according to claim **2,** wherein
    the computing unit includes

    a plate member peripheral edge detecting unit configured to detect a peripheral edge of the uppermost plate member from the image and to create plate member information, and
    a plate member position calculating unit configured to calculate the position of the uppermost plate member by comparing the plate member information with the template information.

4.  The plate member position detection device according to claim 3, wherein:

    the plate member peripheral edge detecting unit creates a plurality of pieces of plate member information on the stacked plate members, including the plate member information on the uppermost plate member; and
    the plate member position calculating unit compares the plurality of pieces of plate member information with the template information and calculates the position of the uppermost plate member based on plate member information having a highest rate of matching with the template information.

5.  The plate member position detection device according to claim 4, wherein
    the plate member position calculating unit calculates a position of a gravitational center of the uppermost plate member in an actual space based on the vertical distance.

6.  A plate member transport method for handling and transporting an uppermost plate member among stacked plate members with the uppermost plate member being adsorbed and lifted by an adsorption mechanism of a lifting device, the plate member transport method comprising:

acquiring, by an image acquisition unit, an image of the stacked plate members including the whole uppermost plate member;

detecting a position of the uppermost plate member by comparing template information created in advance for the uppermost plate member with the image; and

handling and transporting the uppermost plate member such that the uppermost plate member is adsorbed by the adsorption mechanism and lifted by the lifting device after the adsorption mechanism is positioned based on the detected position of the uppermost plate member.

7. A plate member manufacturing method, comprising
handling and transporting the uppermost plate member with the uppermost plate member being lifted based on the position of the uppermost plate member which position is detected by the plate member position detection device according to any one of claims 1 to 5.

FIG. 1

EP 4 530 243 A1

FIG. 2

```
  5 ┐ ┌─────────────┐          ┌─────────────────────────────────────┐  ┌─────────────────────────────────────────┐
    └─┤   IMAGE     │        3 │            CONTROL DEVICE           │1 │          CRANE (LIFTING DEVICE)          │
      │ ACQUISITION │          │                                     │  │                                         │
      │    UNIT     │          │ ┌───────────┐ ┌─────────────────┐   │  │ ┌─────────────┐ ┌─────────────────────┐ │
      └─────────────┘          │ │           │ │   ADSORPTION    │   │  │ │ ADSORPTION  │ │     ADSORPTION      │ │
  6 ┐ ┌─────────────┐          │ │ COMPUTING │ │   MECHANISM     │   │  │ │ MECHANISM   │ │     MECHANISM       │ │
    └─┤  VERTICAL   │          │ │   UNIT    │ │ CONTROL UNIT    │   │  │ │ DRIVE UNIT  │ │  (LIFTING MAGNET)   │ │
      │  DISTANCE   │          │ │           │ │                 │   │  │ │             │ │                     │ │
      │DETECTING UNIT│         │ └───────────┘ └─────────────────┘   │  │ └─────────────┘ └─────────────────────┘ │
      └─────────────┘          └─────────────────────────────────────┘  └─────────────────────────────────────────┘
                                      4            31                           21                     2
```

# FIG. 3

```
        5                    7                        4
        |                    |                        |

┌───────────────┐   ┌──────────────────────────────────────────────────────┐
│     IMAGE     │   │  ┌─────────────────┐              COMPUTING UNIT      │
│  ACQUISITION  │───┼──│  PLATE MEMBER   │                                  │
│     UNIT      │   │  │ PERIPHERAL EDGE │                                  │
└───────────────┘   │  │ DETECTING UNIT  │                                  │
                    │  └─────────────────┘                                  │
                    │        PLATE MEMBER INFORMATION                       │
                    │  ┌─────────────────┐                                  │
       10 ─────────────│  PLATE MEMBER   │                                  │───── PLATE MEMBER
                    │  │    POSITION     │                                    POSITION
                    │  │ CALCULATING UNIT│                                    (GRAVITATIONAL
                    │  └─────────────────┘                                    CENTER POSITION)
                    │        TEMPLATE INFORMATION                           │
        6           │  ┌─────────────────┐  ┌────────────────────────────┐ │
        |           │  │  PLATE MEMBER   │  │ INFORMATION STORAGE UNIT   │ │
┌───────────────┐   │  │    TEMPLATE     │  │ ⎛ PLATE-MEMBER DIMENSION ⎞ │ │
│   VERTICAL    │   │  │  INFORMATION    │  │ ⎜      INFORMATION       ⎜ │ │
│   DISTANCE    │───┼──│  CREATING UNIT  │  │ ⎜ IMAGE-ACQUISITION-UNIT ⎜ │ │
│  DETECTING    │   │  └─────────────────┘  │ ⎝  POSITIONAL INFORMATION⎠ │ │
│     UNIT      │   │                       └────────────────────────────┘ │
└───────────────┘   └──────────────────────────────────────────────────────┘
                              |                        |
                              9                        8
```

# FIG. 4A

P1

P3

P2

# FIG. 4B

Q1

Q3

Q2

# FIG. 4C

R3

R2

R1

# FIG. 5

POINT 1
$(x_1, y_1)$

POINT 2
$(x_2, y_2)$

T

POINT 3
$(x_3, y_3)$

POINT 4
$(x_4, y_4)$

FIG. 6A

FIG. 6B

## FIG. 7A

POINT 1  POINT 2

POINT 3  POINT 4

R3

T

## FIG. 7B

POINT 1  POINT 2

R2

T

POINT 3  POINT 4

## FIG. 7C

T  R1

POINT 1  POINT 2

POINT 3  POINT 4

T

FIG. 8

FIG. 9A

FIG. 9B

# FIG. 10

## INTERNATIONAL SEARCH REPORT

| International application No. |
| --- |
| **PCT/JP2023/019848** |

| A. | CLASSIFICATION OF SUBJECT MATTER |
| --- | --- |

**B66C 13/22**(2006.01)i
FI: B66C13/22 V; B66C13/22 X

According to International Patent Classification (IPC) or to both national classification and IPC

| B. | FIELDS SEARCHED |
| --- | --- |

Minimum documentation searched (classification system followed by classification symbols)

B66C13/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 7-330287 A (NIPPON STEEL CORP) 19 December 1995 (1995-12-19) paragraphs [0013]-[0026], fig. 1-3 | 1, 6-7 |
| A | JP 11-353488 A (AMADA CO LTD) 24 December 1999 (1999-12-24) | 1-7 |
| A | JP 2019-189398 A (HITACHI PLANT MECH CO LTD) 31 October 2019 (2019-10-31) | 1-7 |
| A | JP 1-242392 A (KAWASAKI STEEL CORP) 27 September 1989 (1989-09-27) | 1-7 |
| A | 大庭 博明 OHBA, Hiroaki. 電子情報通信学会１９９９年総合大会講演論文集 情報・システム２ PROCEEDINGS OF THE 1999 IEICE GENERAL CONFERENCE. p. 236 | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 July 2023** | **08 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

22

**INTERNATIONAL SEARCH REPORT**
Information on patent family members

International application No.

**PCT/JP2023/019848**

| Patent document<br>cited in search report | | | Publication date<br>(day/month/year) | Patent family member(s) | Publication date<br>(day/month/year) |
|---|---|---|---|---|---|
| JP | 7-330287 | A | 19 December 1995 | (Family: none) | |
| JP | 11-353488 | A | 24 December 1999 | (Family: none) | |
| JP | 2019-189398 | A | 31 October 2019 | (Family: none) | |
| JP | 1-242392 | A | 27 September 1989 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7330287 A